# EUROPÄISCHE PATENTSCHRIFT

(11) **EP 2 830 906 B1**
(45) Veröffentlichungstag und Bekanntmachung des Hinweises auf die Patenterteilung: **06.04.2022**
(21) Anmeldenummer: 13705148.8
(22) Anmeldetag: 14.02.2013
(51) Int. Cl.: B60L 3/00, H02H 3/14

(54) **HOCHVOLTSYSTEM MIT EINER SICHERUNGSEINRICHTUNG**
A HIGH-VOLTAGE SYSTEM WITH A SAFETY DEVICE
UN SYSTÈME À HAUTE TENSION AVEC DISPOSITIF DE PROTECTION

(30) Priorität: 27.03.2012 DE 102012204862
(43) Veröffentlichungstag der Anmeldung: 04.02.2015
(73) Patentinhaber: Robert Bosch GmbH, 70442 Stuttgart (DE)
(72) Erfinder: HORST, Hans-Georg, 71229 Leonberg (DE); GOTTWICK, Ulrich, 70192 Stuttgart (DE); BINDER, Juergen, 70794 Filderstadt-Plattenhardt (DE); BIURRUN SOTELO, Rodrigo, 52074 Aachen (DE)
(86) Internationale Anmeldenummer: PCT/EP2013/052982
(87) Internationale Veröffentlichungsnummer: WO 2013/143770

(56) Entgegenhaltungen:
- EP-A1- 2 405 565
- JP-A- S5 888 964
- US-A- 5 847 655
- US-A1- 2009 268 354

## Beschreibung

Die Erfindung betrifft ein Hochvoltsystem mit einer Sicherungseinrichtung, insbesondere für eine Hochvoltbatterie eines elektrischen Antriebssystems.

### Stand der Technik

Es zeichnet sich ab, dass in Zukunft sowohl bei stationären Anwendungen, wie z.B.

Windkraftanlagen oder Solaranlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren.

Elektrische Antriebssysteme, beispielsweise in elektrisch betriebenen Fahrzeugen wie Hybridfahrzeugen, Elektroautos, Brennstoffzellenfahrzeugen oder Fahrzeugen mit Reichweitenerweiterung (Range Extender), weisen Komponenten zur Energiespeicherung und Energiewandlung auf, die mit elektrischen Hochspannungen arbeiten. Elektrische Hochspannungen sind in diesem Zusammenhang Spannungen von mehr als 60 Volt, die für Menschen potentiell lebensgefährlich sein können. Daher ist unter allen Umständen eine elektrische Isolierung dieser Komponenten gegenüber dem Fahrzeug, den Insassen und gegebenenfalls weiteren mit dem Fahrzeug befassten Personen vonnöten.

Für die Inspektion, Wartung und Reparatur von Hochvoltkomponenten muss sichergestellt werden, dass der Zugang zu den Hochvoltkomponenten zum einen nicht durch unbefugte Personen erfolgt und zum anderen keine Gefährdung von Personen bei den Arbeiten an den Hochvoltkomponenten auftreten kann. Erstere Randbedingung wird meist durch sogenannte "Service Disconnect"-Einrichtungen realisiert, mithilfe derer der Zugang zu den Hochvoltkomponenten nur unter Einsatz von Spezialwerkzeug möglich ist. Die Druckschriften US 2007/0235313 A1 und US 2008/0297303 A1 offenbaren Beispiele für derartige Service-Disconnect-Einrichtungen.

Um überdies sicherzustellen, dass bei einem externen Zugreifen auf die Hochvoltkomponenten keine Hochspannung mehr in dem Hochvoltsystem anliegt, sind zusätzliche Maßnahmen notwendig. Bei bekannten Maßnahmen, wie beispielsweise in den Druckschriften US 7,402,068 B1, US 7,530,850 B2 oder US 7,084,361 B1 offenbart, wird der Zugang zu den Hochvoltkomponenten durch geeignete mechanische Maßnahmen erschwert, um nach einer Deaktivierung des Hochvoltsystems eine ausreichend lange Zeitspanne bereitzustellen, während derer die Hochvoltkomponenten entladen werden können. In anderen Lösungen, wie beispielsweise in der Druckschrift US 7,679,211 B2 beschrieben, wird eine eventuell vorhandene Hochvoltspannung über einen Widerstand in der Service-Disconnect-Einrichtung umgeleitet.

Die Druckschrift EP 2 405 565 A1 offenbart ferner ein Wechselrichter-System für ein Elektrofahrzeug, welches die Wärmeentwicklung in einem Entladungswiderstand eines Glättungskondensators verkleinert, in dem die Entladung durch einen Entladungs-Steuerschaltkreis geregelt wird. Die Druckschrift US 2009/0268354 A1 offenbart ein Verfahren und ein System zur Entladung eines Hochspannung-Netzes eines Fahrzeugs mit logarithmischen Selbstschutz, wobei auch bei Störungen des Fahrzeugs während der Entladung nur eine geringe Leistung über einem Entladungswiderstand abfällt.

Die Druckschrift US 2004/0017643 A1 offenbart weiterhin ein Verriegelungssystem für einen Schrank mit elektrischen Strom führenden Komponenten, wobei der Schrank erst entriegelt wird, wenn die Spannung an den Komponenten unterhalb eines Schwellwerts liegt. Die Druckschrift US 5,847,655 A1 offenbart ferner einen Entladungsschaltkreis sowie ein Verfahren zum sicheren Öffnen einer Kiste, welche ein elektrisches Hochspannungssystem enthält, wobei das Entfernen einer Kistenabdeckung automatisch zum Abschalten des Hochspannungssystems führt. Ferner offenbart die Druckschrift JP S58 88964 A ein System für Faxgeräte und ähnliche Vorrichtungen, welches Fehlfunktionen aufgrund von geöffneten Klappen verhindert.

### Offenbarung der Erfindung

Die vorliegende Erfindung schafft ein Hochvoltsystem mit den Merkmalen des unabhängigen Patentanspruchs. Weitere vorteilhafte Ausführungsformen sind Gegenstand der abhängigen Patentansprüche.

### Vorteile der Erfindung

Eine Idee der vorliegenden Erfindung ist es, das Öffnen eines Sicherheitsgehäuses eines Hochvoltsystems von innen zu blockieren, bis die Spannung, die an den Hochvoltkomponenten des Hochvoltsystems anliegt, bzw. ein Stromfluss, der durch die Hochvoltkomponenten des Hochvoltsystems fließt, unter einen sicherheitskritischen Grenzwert gesunken ist. Dazu werden die entsprechenden elektrischen Parameter nach einem Entriegelungssignal überwacht, und die Verriegelung des Gehäuses erst bei einem Unterschreiten der kritischen Sicherheitsgrenzwerte freigegeben. Dazu werden die Hochvoltkomponenten des Hochvoltsystems bei einem Empfang eines Entriegelungssignals aktiv entladen, und der Status der Hochvoltkomponenten während des Entladens laufend überwacht.

Einer der Vorteile der erfindungsgemäßen Sicherungseinrichtung besteht darin, dass ein zuverlässiger Zugriffsschutz auf die Hochvoltkomponenten des Hochvoltsystems implementiert werden kann, der eine Gefährdung von mit dem Hochvoltsystem befassten Personen durch elektrische Hochspannung minimieren kann. Zusätzliche Spannungsprüfungen an dem Hochvoltsystem müssen daher nicht mehr vorgesehen werden.

Ein weiterer Vorteil besteht darin, dass durch die automatische Prüfung der elektrischen Parameter aufwändige zusätzliche Montage- oder Demontageprozeduren des Gehäuses entfallen, und somit die Zugriffszeit auf die Hochvoltkomponenten, beispielsweise bei einer Wartung oder Reparatur minimiert wird.

Besonders vorteilhaft kann die Sicherungseinrichtung bei Hochvoltsystemen mit Brennstoffzellen eingesetzt werden, da dort unter Umständen das Risiko von durch Gasdiffusionsprozesse erzeugten Spannungen besteht, selbst wenn das Hochvoltsystem eigentlich bereits abgeschaltet ist. Die Überwachung der Verriegelung des Gehäuses bietet somit auch in diesem Fall einen zusätzlichen Schutz vor Hochspannungen.000

Gemäß einer Ausführungsform kann die Überwachungseinrichtung ein elektromagnetisches, thermisches oder elektronisches Spannungsrelais umfassen.

Gemäß einer weiteren Ausführungsform kann die Überwachungseinrichtung ein Bimetall-Schaltglied umfassen.

Gemäß einer weiteren Ausführungsform können die elektrischen Parameter der Entladeschaltung einen Stromfluss durch die Entladeschaltung oder eine über der Entladeschaltung anliegende Spannung umfassen.

Gemäß einer weiteren Ausführungsform kann die Entladeschaltung eine Serienschaltung aus einem Schalter und einem Entladewiderstand aufweisen.

Die Betätigungseinrichtung umfasst einen mit einem Wartungsschlüssel betätigbaren Service-Disconnect-Schalter.

Gemäß einer weiteren Ausführungsform des erfindungsgemäßen Systems kann der Service-Disconnect-Schalter in einem ersten Schaltzustand den Sicherungsschalter betätigt, und in einem zweiten Schaltzustand den Verriegelungsmechanismus zum Entriegeln des Gehäuses betätigen.

Gemäß einer weiteren Ausführungsform des erfindungsgemäßen Systems kann die Überwachungseinrichtung dazu ausgelegt sein, ein Schalten des Service-Disconnect-Schalters in den zweiten Schaltzustand zu unterbinden, solange mindestens einer der elektrischen Parameter der Entladeschaltung den vorbestimmten Schwellwert nicht unterschreitet.

Gemäß einer Ausführungsform können die elektrischen Parameter der Entladeschaltung einen Stromfluss durch die Entladeschaltung oder eine über der Entladeschaltung anliegende Spannung umfassen.

Gemäß einer Ausführungsform der vorliegenden Erfindung kann ein erfindungsgemäßes Hochvoltsystem in einem elektrischen Antriebssystem eines elektrisch betriebenen Fahrzeugs vorgesehen sein, wobei mindestens eine der Hochvoltkomponenten eine Traktionsbatterie des elektrisch betriebenen Fahrzeugs umfasst.

Weitere Merkmale und Vorteile von Ausführungsformen der Erfindung ergeben sich aus der nachfolgenden Beschreibung mit Bezug auf die beigefügten Zeichnungen. Kurze

### Beschreibung der Zeichnungen

Es zeigen:
- Fig. 1: eine schematische Darstellung eines Systems mit Hochvoltkomponenten und einer Sicherungseinrichtung gemäß einer Ausführungsform der vorliegenden Erfindung;
- Fig. 2: eine schematische Darstellung eines Systems mit Hochvoltkomponenten und einer Sicherungseinrichtung gemäß einer weiteren Ausführungsform der vorliegenden Erfindung; und
- Fig. 3: eine schematische Darstellung eines Verfahrens zum Sichern des Zugriffs auf Hochvoltkomponenten gemäß einer weiteren Ausführungsform der vorliegenden Erfindung.

Hochvoltsysteme im Sinne der vorliegenden Erfindung sind Systeme oder Anlagen, welche über Komponenten oder Bauteile verfügen, die mit hohen elektrischen Spannungen oder Stromflüssen arbeiten oder an denen zumindest temporär entsprechend hohe elektrische Spannungen anliegen können. Hohe Spannungen können in diesem Zusammenhang Spannungswerte sein, die für Menschen potentiell gesundheitsgefährdend sein können, beispielsweise Spannungen von mehr als 60 Volt.

Hochvoltsysteme können dabei insbesondere in elektrischen Antriebssystemen elektrisch betriebener Fahrzeuge wie beispielsweise in Hybridfahrzeugen, Elektroautos, Brennstoffzellenfahrzeugen oder Fahrzeugen mit Reichweitenerweiterung (Range Extender) eingesetzt werden. Diese Hochvoltsysteme können dem Zugriff durch Menschen ausgesetzt sein, beispielsweise bei einer Wartung, Inspektion oder Reparatur des elektrisch betriebenen Fahrzeugs.

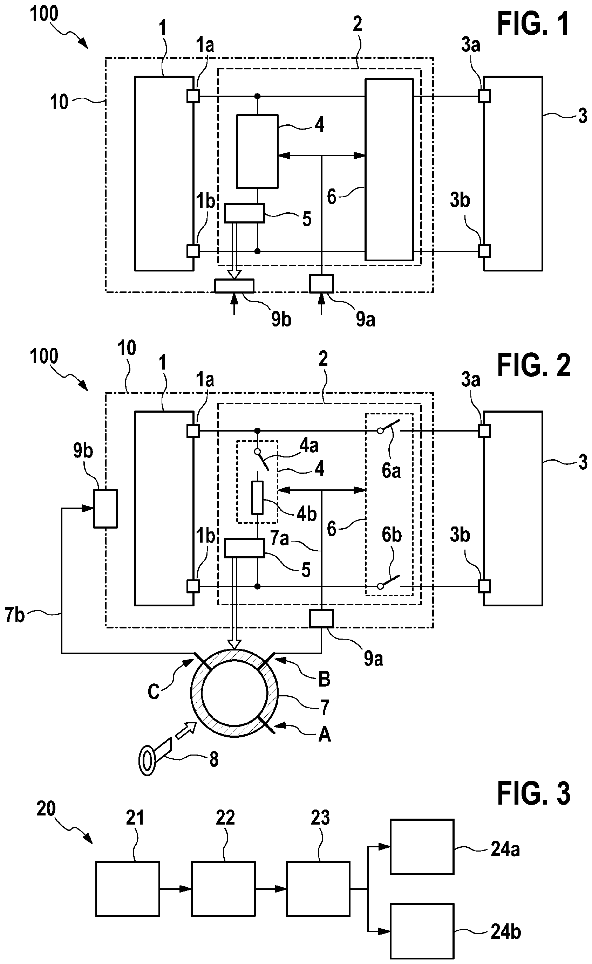

Fig. 1 zeigt eine schematische Darstellung eines Hochvoltsystems 100 mit Hochvoltkomponenten 1 und einer Sicherungseinrichtung 2. Die Hochvoltkomponenten 1 sind beispielhaft als ein Bauteil mit Ausgangsanschlüssen 1a und 1b dargestellt, wobei jedoch eine Vielzahl von gekoppelten Hochvoltkomponenten 1 ebenso möglich ist. Hochvoltkomponenten 1 im Sinne der vorliegenden Erfindung sind Bauteile, die mit hohen elektrischen Spannungen oder Stromflüssen arbeiten oder an denen zumindest temporär entsprechend hohe elektrische Spannungen anliegen können. Hochvoltkomponenten 1 können beispielsweise Traktionsbatterien, Energiespeicherzellen, Akkumulatoren, Spannungswandler, Umrichter oder ähnliche Komponenten umfassen.

Die Hochvoltkomponenten 1 sind durch ein Gehäuse 10 gegenüber einem Zugriff von außen abgeschirmt. Das Gehäuse 10 kann beispielsweise eine Schutzabdeckung, eine Verkappung, eine Wandung oder sonstige zu öffnende und wiederverschließbare Elemente umfassen, die eine elektrische Isolierung der Hochvoltkomponenten 1 gegenüber der Außenwelt bereitstellen. Das Gehäuse 10 kann dabei ein oder mehrere Verriegelungselemente 9b aufweisen, die ein funktionsgemäßes Öffnen des Gehäuses 10 selektiv verhindern oder ermöglichen können, je nach Verriegelungszustand der Verriegelungselemente 9b. Beispielhaft ist in Fig. 1 nur ein Verriegelungselement 9b gezeigt, wobei die Anordnung und Anzahl der Verriegelungselemente 9b prinzipiell frei wählbar ist.

Die Hochvoltkomponenten 1 können über Hochspannungsleitungen mit Eingangsanschlüssen 3a, 3b weiterer Komponenten 3 des gesamten Systems gekoppelt sein. Die weiteren Komponenten 3 können beispielsweise externe Komponenten sein, wie zum Beispiel ein Niederspannungsbordnetz. Die weiteren Komponenten 3 sind prinzipiell Komponenten, die keine Spannungen mit für Menschen potentiell gesundheitsgefährdenden Spannungswerten tragen. Die Sicherungseinrichtung 2 weist eine Koppeleinrichtung 6 auf, welche die Hochvoltkomponenten 1 des Hochvoltsystems 100 mit den externen Komponenten 3 schaltbar koppelt. Die Koppeleinrichtung 6 kann dazu ausgelegt sein, die Hochvoltkomponenten 1 elektrisch von den externen Komponenten 3 zu trennen. Dies kann beispielsweise in Abhängigkeit von der Betätigung eines Sicherungsschalters 9a geschehen, welcher mit der Sicherungseinrichtung 2 in Verbindung steht.

Das Betätigen des Sicherungsschalters 9a kann neben der Koppeleinrichtung 6 auch eine Entladeschaltung 4 betätigen, welche zwischen die Hochspannungsleitungen der Hochvoltkomponenten 1 gekoppelt ist. Die Entladeschaltung 4 ist dazu ausgelegt, die Hochvoltkomponenten 1 elektrisch zu entladen. Die Sicherungseinrichtung 2 weist weiterhin eine Überwachungseinrichtung 5 auf, welche dazu ausgelegt ist, elektrische Parameter der Entladeschaltung 4 oder der Hochvoltkomponenten 1 zu überwachen. Die elektrischen Parameter können beispielsweise eine über die Entladeschaltung 4 abfallende Spannung oder ein durch die Entladeschaltung fließender Strom aufweisen. Alternativ oder zusätzlich können bestimmte oder alle der Hochvoltkomponenten 1 mit entsprechenden Überwachungseinrichtungen versehen werden. Wenn mindestens einer der elektrischen Parameter der Entladeschaltung 4 einen vorbestimmten Schwellwert unterschreitet, kann die Überwachungseinrichtung 5 dazu ausgelegt sein, die Verriegelung des Gehäuses 10 für die Hochvoltkomponenten 1 freizugeben. Wenn mehrere elektrische Parameter überwacht werden, kann eine Freigabe erst dann erfolgen, wenn eine vorbestimmte Anzahl von Bedingungen gleichzeitig erfüllt ist. Dazu kann die Überwachungseinrichtung 5 beispielsweise die Verriegelungselemente 9b ansteuern. Die Ansteuerung der Verriegelungselemente 9b kann beispielsweise elektrisch oder mechanisch erfolgen. Die Überwachungseinrichtung 5 kann zum Beispiel ein elektromagnetisches, thermisches oder elektronisches Spannungsrelais umfassen. Eine Möglichkeit für ein thermisches Spannungsrelais kann dabei ein Bimetall-Schaltglied sein, wie es in Motorschutzschaltern oder mechanischen Klappenverriegelungen für Haushaltsgeräte wie beispielsweise Waschmaschinen oder Trocknern eingesetzt wird.

Fig. 2 zeigt eine schematische Darstellung eines Hochvoltsystems 100 mit Hochvoltkomponenten 1 und einer Sicherungseinrichtung 2 in größerem Detail. Die Verriegelungselemente 9b und der Sicherungsschalter 9a können dabei mit einer Betätigungseinrichtung 7 gekoppelt und durch diese zum Entriegeln des Gehäuses 10 betätigt werden. Die Betätigungseinrichtung 7 weist dabei einen mit einem Wartungsschlüssel 8 betätigbaren Service-Disconnect-Schalter 7 bzw. Wartungsschalter auf. In einem Betriebsschaltzustand A ist das Hochvoltsystem 100 dabei in Betrieb. Wenn der Service-Disconnect-Schalter 7 mithilfe des Wartungsschlüssels 8 in einem ersten Schaltzustand B gebracht wird, wird dadurch der Sicherungsschalter 9a elektrisch oder mechanisch betätigt. Dies löst über ein Sicherungssignal 7a ein Trennen der Hochvoltkomponenten 1 von den externen Komponenten 3 aus, indem die Trennschütze 6a, 6b der Koppeleinrichtung 6 geöffnet werden.

Zusätzlich kann entweder in Abhängigkeit des Sicherungssignals 7a oder automatisch bei einem Erfassen eines offenen Zustands der Trennschütze 6a, 6b der Koppeleinrichtung 6 die Entladeschaltung 4 aktiviert werden. Die Entladeschaltung 4 in Fig. 2 weist beispielhaft eine Serienschaltung aus einem Schalter 4a und einem Entladewiderstand 4b auf. Ein Entladen der Hochvoltkomponenten 1 erfolgt dabei durch ein Schließen des Schalters 1 und ein Umwandeln von Residualspannung an den Hochvoltkomponenten 1 in Abwärme.

Die Überwachungseinrichtung 5 kann dabei den Stromfluss oder die Spannung in der Entladeschaltung 4 überwachen. Solange mindestens einer der durch die Überwachungseinrichtung 5 überwachten elektrischen Parameter noch nicht einen vorbestimmten Grenzwert bzw. Schwellwert unterschreitet, verhindert die Überwachungseinrichtung 5 durch eine mechanische Verriegelung, dass der Service-Disconnect-Schalter 7 von den ersten Schaltzustand B in einen zweiten Schaltzustand C gebracht werden kann. Erst wenn beispielsweise die Spannung in der Entladeschaltung 4 den vorbestimmten Schwellwert, zum Beispiel 60 V, unterschreitet, gibt die Überwachungseinrichtung 5 den Service-Disconnect-Schalter 7 mechanisch frei.

Der zweite Schaltzustand C dient dabei dazu, die Verriegelungselemente 9b bzw. den Verriegelungsmechanismus 9b zum Entriegeln des Gehäuses 10 zu betätigen. Die Überwachungseinrichtung 5 ist also dazu ausgelegt, ein Schalten des Service-Disconnect-Schalters 7 in den zweiten Schaltzustand C zu unterbinden, solange mindestens einer der elektrische Parameter den vorbestimmten Schwellwert nicht unterschreitet.

Eine mögliche Erweiterung des Hochvoltsystems 100 besteht darin, dass an dem Gehäuse 10 oder an der Betätigungseinrichtung 7 eine visuelle oder auditive Anzeigeeinrichtung (nicht gezeigt) angeordnet wird, die einem Nutzer des Hochvoltsystems, beispielsweise dem Wartungspersonal, anzeigt, ob die Hochvoltkomponenten 1 bereits entladen sind oder nicht. Im einfachsten Fall kann die Anzeigeeinrichtung beispielsweise eine Glimmlampe oder LED sein, die aufleuchtet, solange die Spannung noch zu hoch ist. Andere Anzeigeeinrichtungen wie akustische Warnsignalgeber oder Messanzeigen sind ebenso denkbar.

Zur Erhöhung der Sicherheit des Hochvoltsystems 100 kann im Schaltzustand C auch eine elektrische Verbindung aller Hochvoltkomponenten 1 mit einem Massepotential, beispielsweise der Fahrzeugmasse, hergestellt werden, was eine Potentialgleichheit zum Fahrzeug bewirkt und das Gefährdungspotential für den Nutzer weiter reduziert.

Fig. 3 zeigt eine schematische Darstellung eines Verfahrens 20 zum Sichern eines Hochvoltsystems, insbesondere in einem elektrischen Antriebssystem eines elektrisch betriebenen Fahrzeugs. Das Verfahren 20 kann beispielsweise zum Betreiben eines Hochvoltsystems 100 wie in den Fig. 1 und 2 dargestellt eingesetzt werden. In einem ersten Schritt 21 erfolgt, in Abhängigkeit von der Betätigung eines Sicherungsschalters 9a, ein elektrisches Trennen von Hochvoltkomponenten 1 des Hochvoltsystems 100 von externen Komponenten 3. In einem zweiten Schritt 22, erfolgt ein elektrisches Entladen 22 der Hochvoltkomponenten 1 in Abhängigkeit von der Betätigung des Sicherungsschalters 9a über eine Entladeschaltung 4. In einem dritten Schritt 23 erfolgt ein Überwachen 23 elektrischer Parameter der Entladeschaltung 4 oder der Hochvoltkomponenten 1, beispielsweise eines Stromflusses durch die Entladeschaltung 4 oder einer über der Entladeschaltung 4 anliegenden Spannung.

Solange einer oder mehrere der elektrischen Parameter der Entladeschaltung 4 oder der Hochvoltkomponenten 1 einen vorbestimmten Schwellwert noch nicht unterschreiten, wird die Verriegelung des Gehäuses 10 in Schritt 24a noch nicht freigegeben. Erst wenn einer oder mehrere der elektrischen Parameter der Entladeschaltung 4 oder der Hochvoltkomponenten 1 einen vorbestimmten Schwellwert unterschreitet, erfolgt in Schritt 24b ein Freigeben der Verriegelung des Gehäuses 10 der Hochvoltkomponenten 1.

## Patentansprüche

1. Hochvoltsystem (100), mit:
mindestens einer Hochvoltkomponente (1); und
einer Sicherungseinrichtung (2), mit einer Koppeleinrichtung (6), welche Hochvoltkomponenten (1) des Hochvoltsystems (100) mit externen Komponenten (3) schaltbar koppelt, und welche dazu ausgelegt ist, in Abhängigkeit von der Betätigung eines Sicherungsschalters (9a) die Hochvoltkomponenten (1) elektrisch von den externen Komponenten (3) zu trennen, und einer Entladeschaltung (4), welche dazu ausgelegt ist, die Hochvoltkomponenten (1) in Abhängigkeit von der Betätigung des Sicherungsschalters (9a) elektrisch zu entladen;
**dadurch gekennzeichnet, dass**
die Sicherungseinrichtung (2) eine Überwachungseinrichtung (5) umfasst, welche dazu ausgelegt ist, elektrische Parameter der Entladeschaltung (4) oder der Hochvoltkomponenten (1) zu überwachen, und die Verriegelung eines Gehäuses (10) für die Hochvoltkomponenten (1) freizugeben, wenn mindestens einer der elektrischen Parameter der Entladeschaltung (4) oder der Hochvoltkomponenten (1) einen vorbestimmten Schwellwert unterschreitet,
wobei das Hochvoltsystem (100), ferner umfasst:
ein Gehäuse (10), welches die mindestens einer Hochvoltkomponente (1) gegenüber einem Zugriff von außen abschirmt;
einen Verriegelungsmechanismus (9b), welcher das Gehäuse (10) verriegelbar abschließt;
einen Sicherungsschalter (9a), welcher mit der Koppeleinrichtung (6) und der Entladeschaltung (4) gekoppelt ist; und
eine Betätigungseinrichtung (7), welche mit dem Verriegelungsmechanismus (9b) und dem Sicherungsschalter (9a) gekoppelt ist, und welche dazu ausgelegt ist, zum Entriegeln des Gehäuses (10) betätigt zu werden,
wobei die Betätigungseinrichtung (7) einen mit einem Wartungsschlüssel (8) betätigbaren Service-Disconnect-Schalter aufweist.

2. Hochvoltsystem (100) nach Anspruch 1, wobei die Überwachungseinrichtung (5) ein elektromagnetisches, thermisches oder elektronisches Spannungsrelais umfasst.

3. Hochvoltsystem (100) nach Anspruch 2, wobei die Überwachungseinrichtung (5) ein Bimetall-Schaltglied umfasst.

4. Hochvoltsystem (100) nach einem der Ansprüche 1 bis 3, wobei die elektrischen Parameter der Entladeschaltung (4) einen Stromfluss durch die Entladeschaltung (4) oder eine über der Entladeschaltung (4) anliegende Spannung umfassen.

5. Hochvoltsystem (100) nach einem der Ansprüche 1 bis 4, wobei die Entladeschaltung (4) eine Serienschaltung aus einem Schalter (4a) und einem Entladewiderstand (4b) aufweist.

6. Hochvoltsystem (100) nach einem der Ansprüche 1 bis 5, wobei der Service-Disconnect-Schalter (7) in einem ersten Schaltzustand (B) den Sicherungsschalter (9a) betätigt, und in einem zweiten Schaltzustand (C) den Verriegelungsmechanismus (9b) zum Entriegeln des Gehäuses (10) betätigt.

7. Hochvoltsystem (100) nach Anspruch 6, wobei die Überwachungseinrichtung (5) dazu ausgelegt ist, ein Schalten des Service-Disconnect-Schalters (7) in den zweiten Schaltzustand (C) zu unterbinden, solange mindestens einer der elektrischen Parameter der Entladeschaltung (4) den vorbestimmten Schwellwert nicht unterschreitet.

8. Elektrisches Antriebssystem für ein elektrisch betriebenes Fahrzeug, mit einem Hochvoltsystem (100) nach einem der Ansprüche 1 bis 7, wobei die mindestens eine Hochvoltkomponente (1) eine Traktionsbatterie des elektrisch betriebenen Fahrzeugs umfasst.

## Claims

1. High-voltage system (100), comprising:
at least one high-voltage component (1); and
a safety device (2) having a coupling device (6) which switchably couples high-voltage components (1) of the high-voltage system (100) to external components (3) and which is designed to electrically isolate the high-voltage components (1) from the external components (3) as a function of the operation of a safety switch (9a), and having a discharge circuit (4) which is designed to electrically discharge the high-voltage components (1) as a function of the operation of the safety switch (9a),
**characterized in that**
the safety device (2) comprises a monitoring device (5) which is designed to monitor electrical parameters of the discharge circuit (4) or the high-voltage components (1) and to release the locking of a housing (10) for the high-voltage components (1) when at least one of the electrical parameters of the discharge circuit (4) or the high-voltage components (1) falls below a predetermined threshold value,
wherein the high-voltage system (100) further comprises:
a housing (10) which protects the at least one high-voltage component (1) against access from the outside;
a locking mechanism (9b) which lockably closes the housing (10);
a safety switch (9a) which is coupled to the coupling device (6) and the discharge circuit (4); and
an operating device (7) which is coupled to the locking mechanism (9b) and the safety switch (9a) and which is designed to be operated in order to unlock the housing (10), wherein the operating device (7) has a service disconnect switch which can be operated by a maintenance key (8).

2. High-voltage system (100) according to Claim 1, wherein the monitoring device (5) comprises an electromagnetic, thermal or electronic voltage relay.

3. High-voltage system (100) according to Claim 2, wherein the monitoring device (5) comprises a bimetallic switching element.

4. High-voltage system (100) according to one of Claims 1 to 3, wherein the electrical parameters of the discharge circuit (4) include a current flow through the discharge circuit (4) or a voltage which is applied via the discharge circuit (4).

5. High-voltage system (100) according to one of Claims 1 to 4, wherein the discharge circuit (4) has a series circuit comprising a switch (4a) and a discharge resistor (4b) .

6. High-voltage system (100) according to one of Claims 1 to 5, wherein the service disconnect switch (7) operates the safety switch (9a) in a first switching state (B) and operates the locking mechanism (9b) in order to unlock the housing (10) in a second switching state (C).

7. High-voltage system (100) according to Claim 6, wherein the monitoring device (5) is designed to suppress switching of the service disconnect switch (7) in the second switching state (C), provided that at least one of the electrical parameters of the discharge circuit (4) does not fall below the predetermined threshold value.

8. Electrical drive system for an electrically operated vehicle, comprising a high-voltage system (100) according to one of Claims 1 to 7, wherein the at least one high-voltage component (1) comprises a traction battery of the electrically operated vehicle.

## Revendications

1. Système haute tension (100), comprenant :
au moins un composant haute tension (1) ; et
un dispositif de sécurité (2) pourvu d'un dispositif de couplage (6) qui couple de manière commutable des composants haute tension (1) du système haute tension (100) avec des composants externes (3), et qui est conçu pour séparer électriquement les composants haute tension (1) des composants externes (3) en fonction de l'actionnement d'un coupe-circuit (9a), et pourvu d'un circuit de décharge (4) qui est conçu pour décharger électriquement les composants haute tension (1) en fonction de l'actionnement du coupe-circuit (9a) ;
**caractérisé en ce que**
le dispositif de sécurité (2) comprend un dispositif de surveillance (5) qui est conçu pour surveiller des paramètres électriques du circuit de décharge (4) ou des composants haute tension (1), et pour libérer le verrouillage d'un boîtier (10) pour les composants haute tension (1) si au moins l'un des paramètres électrique du circuit de décharge (4) ou des composants haute tension (1) passe sous une valeur seuil prédéterminée,
le système haute tension (100) comprenant en outre :
un boîtier (10) qui protège ledit au moins un composant haute tension (1) contre tout accès depuis l'extérieur ;
un mécanisme de verrouillage (9b) qui ferme le boîtier (10) de manière verrouillable ;
un coupe-circuit (9a) qui est couplé avec le dispositif de couplage (6) et le circuit de décharge (4) ; et
un dispositif d'actionnement (7) qui est couplé avec le mécanisme de verrouillage (9b) et le coupe-circuit (9a) et qui est conçu pour être actionné afin de déverrouiller le boîtier (10),
le dispositif d'actionnement (7) présentant un commutateur de déconnexion de maintenance pouvant être actionné par une clé de maintenance (8).

2. Système haute tension (100) selon la revendication 1, dans lequel le dispositif de surveillance (5) comprend un relais de tension électromagnétique, thermique ou électronique.

3. Système haute tension (100) selon la revendication 2, dans lequel le dispositif de surveillance (5) comprend un élément de commutation bimétallique.

4. Système haute tension (100) selon l'une quelconque des revendications 1 à 3, dans lequel les paramètres électrique du circuit de décharge (4) comprennent un flux de courant à travers le circuit de décharge (4) ou une tension appliquée par le biais du circuit de décharge (4).

5. Système haute tension (100) selon l'une quelconque des revendications 1 à 4, dans lequel le circuit de décharge (4) présente une connexion série composée d'un commutateur (4a) et d'une résistance de décharge (4b).

6. Système haute tension (100) selon l'une quelconque des revendications 1 à 5, dans lequel le commutateur de déconnexion de maintenance (7) actionne dans un premier état de commutation (B) le coupe-circuit (9a), et actionne dans un deuxième état de commutation (C) le mécanisme de verrouillage (9b) servant à déverrouiller le boîtier (10).

7. Système haute tension (100) selon la revendication 6, dans lequel le dispositif de surveillance (5) est conçu pour empêcher une commutation du commutateur de déconnexion de maintenance (7) vers le deuxième état de commutation (C) tant qu'au moins l'un des paramètres électriques du circuit de décharge (4) ne passe pas sous la valeur seuil prédéterminée.

8. Système d'entraînement électrique destiné à un véhicule électrique, comprenant un système haute tension (100) selon l'une quelconque des revendications 1 à 7, dans lequel ledit au moins un composant haute tension (1) comprend une batterie de traction du véhicule électrique.
